# EUROPEAN PATENT APPLICATION

(11) **EP 3 736 697 A1**
(43) Date of publication of application: **11.11.2020**
(21) Application number: 19173540.6
(22) Date of filing: 09.05.2019
(51) Int. Cl.: G06F 11/34, G06N 20/00

(54) **METHOD FOR DETERMINING AT LEAST ONE CLASS**

(71) Applicant: Siemens Aktiengesellschaft, 80333 München (DE)
(72) Inventor: Schmid, Reiner, 80538 München (DE); Kempter, Bernhard, 80339 München (DE)

(57) **Abstract**

The invention relates to a computer-implemented method for determining at least one class (12), comprising the steps of Providing at least one input data set (10) with a plurality of performance metrics (12); Preprocessing the at least one input data set (10) into at least one respective processed input data set (10) with a plurality of processed performance metrics (12); and Determining the at least one class (20) using machine learning on the basis of the at least one processed input data set (10). Further, the invention relates to a corresponding computer program product and system.

## Description

### 1. Technical field

The present invention relates to a computer-implemented method for determining at least one class. Further, the invention relates to a corresponding computer program product and system.

### 2. Prior art

Developing a software product or program is a long, labor-intensive process. The development involves contributions from different developers and testers. Developers are frequently making changes to the source code, while testers rush to install the software packages, perform tests and find bugs or defects.

In order to assure the quality of the software and the iterative development of software, the whole software, any adaptation and/or change of the software has to be continuously evaluated.

Performance metrics are well known from the prior art as a way to assess non-functional properties for the resulting Software product and are routinely gathered in the process of testing the non-functional properties of software.

In other words, the software can be evaluated using the measurements of performance metrics during development, the operation or before the operation. Depending on the result of the evaluation, the software, any adaptation or change of the software can be accepted and released or otherwise denied and improved.

There are a number of distinct performance metric types, which can be monitored, including throughput or response time of a program. Regarding a program, usually, a huge number of performance metrics types must be monitored besides the throughput. Moreover, in view of the digitalization, most technical systems or industrial plants comprise a huge number of interacting components and the respective programs running on the components. The complexity and effort of the analysis increases with the increasing amount of data. According to which, a huge amount of data has to be analyzed. The data is statistically analyzed manually, in a time-consuming manner until today. For example, curves are analyzed by inspection performed by software architects and engineers.

It is therefore an objective of the invention to provide a method for determining at least one class, which is more efficient and more reliable.

### 3. Summary of the invention

This problem is according to one aspect of the invention solved by computer-implemented method for determining at least one class, comprising the steps of:
a. Providing at least one input data set with a plurality of performance metrics;
b. Preprocessing the at least one input data set into at least one respective processed input data set with a plurality of processed performance metrics; and
c. Determining the at least one class using machine learning on the basis of the at least one processed input data set.

Accordingly, the invention is directed to a method for determining at least one class.

In a first step, the input data set is received, in particular a plurality or stream of input data sets. The input data set comprises a plurality of performance metrics. Exemplary performance metrics are listed further below, including the throughput or response time of a software program or function.

In a second step, the raw input data set is preprocessed into the processed input data set. The reason is that just the processed input data set or its numeric representation can be further processed in an automated and efficient manner and can be used as input for step c. In particular for response times or throughput measurements, the raw input data set is transformed into a percentile graph. Alternatively, any other kind of numeric representation suited for a particular performance metrics can be considered.

In a last step, the class is determined using machine learning on the basis of the processed input data set. Therefore, a trained classification model or machine-learning classifier is applied using machine learning during throughput.

To the contrary, in the training phase, a set of independent input data sets is used as training data set to train the machine learning model, in particular a classification model. The classification model is a neural network in a preferred embodiment. The class is used as classification target.

Thus, in other words, the classification model is untrained and used in the training process with a training input data set comprising training classes, whereas the classifier is used after training in the running system or for the method according to the invention.

The method according to the invention ensures an improved efficiency and accuracy in determining the class.

Moreover, the resulting determined class and score are more reliable and less error-prone compared to prior art. This way, the class and score can serve as improved basis for more efficient subsequent processing steps, which are built on the reliable output data with e.g. the class.

In one aspect, the method further comprises the step of

Determining at least one respective score for the at least one class using machine learning on the basis of the at least one processed input data set; wherein
the at least one score is the probability that the at least one input data set is correctly assigned to the at least one class.

Accordingly, the score is the probability that the at least one input data set is correctly classified into a class. Thereby, the most likely class or the class with the highest probability is determined using a predicted probability distribution over the input data. In addition, the less likely classes or classes with lower probability can also be determined. For example, the classes with scores exceeding a predefined threshold can be processed or outputted for further processing. The output data with the class and/or score provides statistical inference with regard to the performance behavior of the software program.

In a further aspect, the performance metrics is an element selected from the group, comprising:
Throughput, response time, processing time, memory usage or any other performance metrics with regard to a software program.

In a further aspect, the at least one respective processed input data set is a numerical and/or graphical representation of the at least one input data set, in particular a normalized graph.

In a further aspect, the graph is a percentile graph.

In a further aspect, the at least one class is a class, selected from the group comprising: constant, linear, gradual course of the normalized graph.

In a further aspect, the machine learning is a learning-based approach selected from the group, comprising
neural network, support vector machine, logistic regression, linear regression and random forest.

Thus, the method can be applied in a flexible manner according to the specific application case, underlying technical system and user requirements. Neural networks have proven to be advantageous since they provide high reliability in recognition, can be trained flexibly and offer fast evaluation.

In a further aspect, the method further comprises the step of performing at least one action.

In a further aspect, performing the at least one action depends on the determined at least one score.

In a further aspect, the at least one action is performed, if the at least one score equals or exceeds a predefined threshold.

In a further aspect, the at least one action is an action selected from the group comprising:
- Outputting the at least one input data set, the at least one processed input data set, the at least one class, the at least one score and/or any other related notification;
- Storing the at least one input data set, the at least one processed input data set, the at least one class, the at least one score and/or any other related notification;
- Displaying the at least one input data set, the at least one processed input data set, the at least one class, the at least one score and/or any other related notification; and
- Transmitting the at least one input data set, the at least one processed input data set, the at least one class, the at least one score and/or any other related notification to a computing unit for further processing.

Accordingly, the input data, data of intermediate method steps and/or resulting output data can be further handled. One or more actions can be performed. The action can be equally referred to as measure.

The actions can be triggered depending on the predefined threshold, according to which, the score has to meet and/or exceed a predetermined threshold. These actions can be performed by one or more computing units of the system. The actions can be performed gradually or simultaneously. Actions include e.g. storing and processing steps. The advantage is that appropriate actions can be performed in a timely manner.

For example, a notification related to the determined class with the score can be outputted and/or displayed to a user by means of a display unit, for example the most likely class or classes with scores exceeding a predetermined threshold. The notification can indicate that the performance behavior of the software significantly changed. The notification might further indicate operating notes or instructions, including e.g. information about the impact of the change of the software and/or performance behavior on the overall system, further measures to be performed e.g. scaling.

A further aspect of the invention is a computer program product directly loadable into an internal memory of a computer, comprising software code portions for performing the steps according to any one of the preceding claims when said computer program product is running on a computer.

A further aspect of the invention is a system for determining at least one class, comprising:
a. Receiving unit for providing at least one input data set with a plurality of performance metrics;
b. Preprocessing unit for preprocessing the at least one input data set into at least one respective processed input data set with a plurality of processed performance metrics; and
c. Machine learning model for determining the at least one class using machine learning on the basis of the at least one processed input data set.

The units may be realized as any devices, or any means, for computing, in particular for executing a software, an app, or an algorithm. For example, the receiving unit and/or preprocessing unit may comprise a central processing unit (CPU) and a memory operatively connected to the CPU. The units may also comprise an array of CPUs, an array of graphical processing units (GPUs), at least one application-specific integrated circuit (ASIC), at least one field-programmable gate array, or any combination of the foregoing. The units may comprise at least one module which in turn may comprise software and/or hardware. Some, or even all, modules of the units may be implemented by a cloud computing platform.

### 4. Short description of the drawings

In the following detailed description, presently preferred embodiments of the invention are further described with reference to the following figures:
- Fig. 1: illustrates a flowchart of the method according to the invention.
- Fig. 2: illustrates the input data set according to an embodiment of the present invention.
- Fig. 3: illustrates the processed input data set according to an embodiment of the present invention.

### 5. Detailed description of preferred embodiments

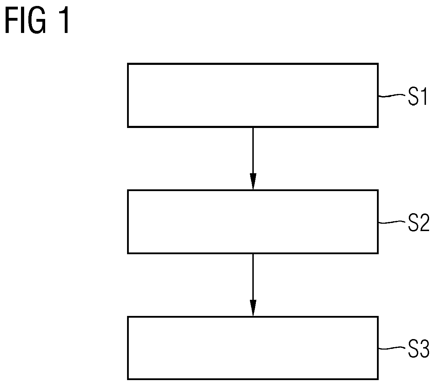

Fig. 1 illustrates a flowchart of the method according to the invention with the method steps S1 to S3. The method steps S1 to S3 will be explained in the following in more detail.

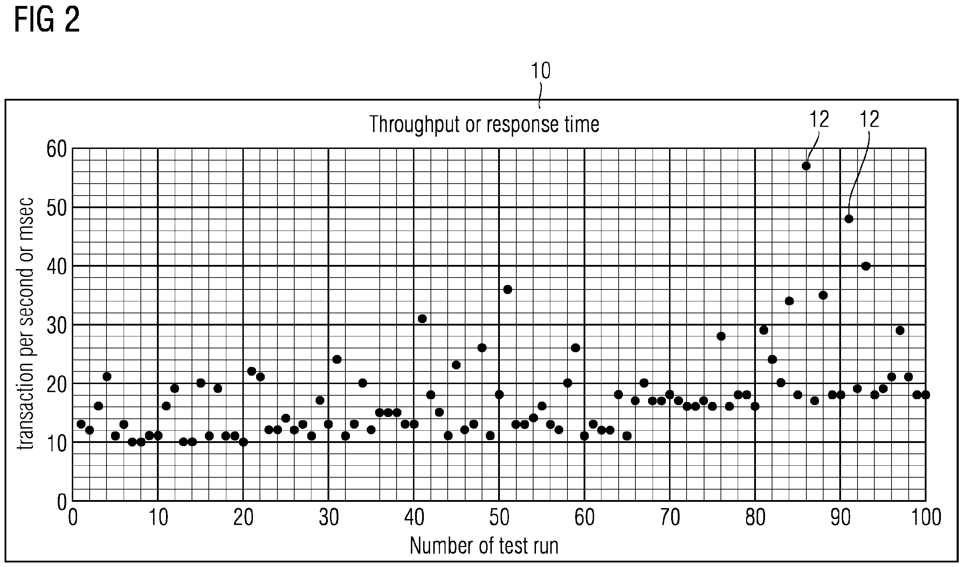

In a first step, the input data set 10 with a plurality of performance metrics 12 is provided S1. The input data set 10 can be referred to as raw or unprocessed input data set 10. According to Figure 2, the response times 12 of a program are received. The number of each test run or program run is shown on the X-axis and the respective response time in msec is shown on the Y-axis.

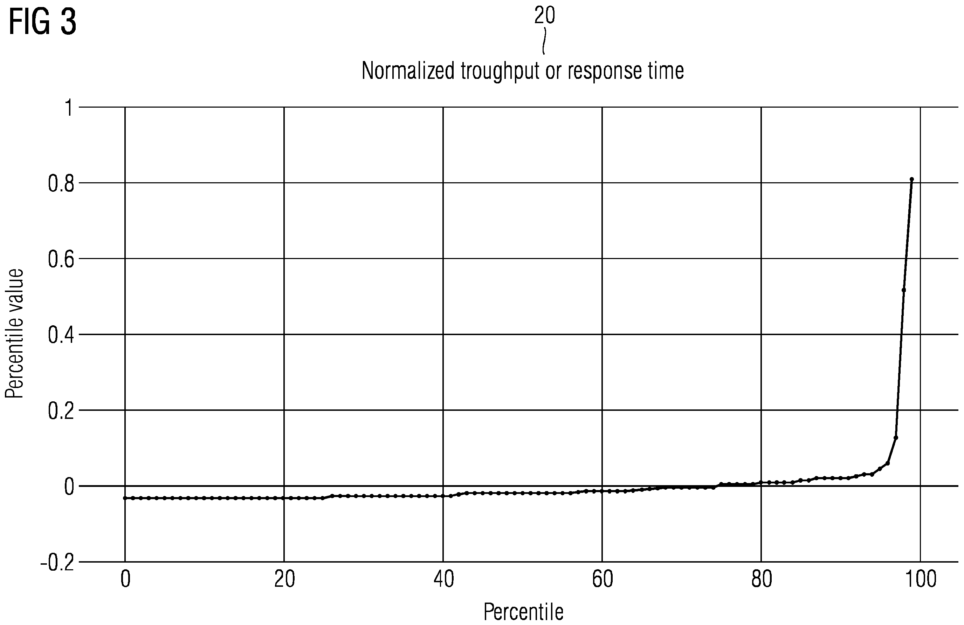

In a second step, the input data set 10 is preprocessed into a respective processed input data set 20 with a plurality of processed performance metrics 22, S2. Referring to the throughput or response times 12, this step S2 results in processed throughput or processed response times 22, in particular a normalized percentile graph. The normalized graph is shown in Figure 3.

In a third step, the class is determined using machine learning on the basis of the processed input data set 20, S3. Referring to the throughput or response times, each normalized percentile graph is assigned to a respective class.

## Claims

1. Computer-implemented method for determining at least one class, comprising the steps of:
a. Providing at least one input data set (10) with a plurality of performance metrics (12)(S1);
b. Preprocessing the at least one input data set (10) into at least one respective processed input data set (20) with a plurality of processed performance metrics (22) (S2); and
c. Determining the at least one class using machine learning on the basis of the at least one processed input data set (20)(S3).

2. Method according to claim 1, wherein the method further comprises the step of
Determining at least one respective score for the at least one class using machine learning on the basis of the at least one processed input data set (20); wherein
the at least one score is the probability that the at least one input data set (10, 20) is correctly assigned to the at least one class.

3. Method according to claim 1 or claim 2, wherein the performance metrics (12, 22) is an element selected from the group, comprising:
Throughput, response time, processing time, memory usage or any other performance metrics with regard to a software program.

4. Method according to any of the preceding claims, wherein the at least one respective processed input data set (20) is a numerical and/or graphical representation of the at least one input data set (10), in particular a normalized graph.

5. Method according to claim 4, wherein the graph is a percentile graph.

6. Method according claim 4 or claim 5, wherein the at least one class is a class, selected from the group comprising: constant, linear, gradual course of the normalized graph.

7. Method according to any of the preceding claims, wherein the machine learning is a learning-based approach selected from the group, comprising
neural network, support vector machine, logistic regression, linear regression and random forest.

8. Method according to any of the preceding claims, wherein the method further comprises the step of
performing at least one action.

9. Method according to claim 8,
performing the at least one action depending on the determined at least one score.

10. Method according to claim 9, wherein the at least one action is performed, if the at least one score equals or exceeds a predefined threshold.

11. Method according to claims 8 - 10,
wherein the at least one action is an action selected from the group comprising:
- Outputting the at least one input data set (10), the at least one processed input data set (20), the at least one class, the at least one score and/or any other related notification;
- Storing the at least one input data set (10), the at least one processed input data set (20), the at least one class, the at least one score and/or any other related notification;
- Displaying the at least one input data set (10), the at least one processed input data set (20), the at least one class, the at least one score and/or any other related notification; and
- Transmitting the at least one input data set (10), the at least one processed input data set (20), the at least one class, the at least one score and/or any other related notification to a computing unit for further processing.

12. A computer program product directly loadable into an internal memory of a computer, comprising software code portions for performing the steps according to any one of the preceding claims when said computer program product is running on a computer.

13. System for determining at least one class, comprising:
a. Receiving unit for providing at least one input data set (10) with a plurality of performance metrics (12);
b. Preprocessing unit for preprocessing the at least one input data set (10) into at least one respective processed input data set (20) with a plurality of processed performance metrics (22); and
c. Machine learning model for determining the at least one class using machine learning on the basis of the at least one processed input data set (20).

14. System according to claim 13, wherein the machine learning model is a trained machine learning model, in particular a classifier.
